# EUROPEAN PATENT SPECIFICATION

(11) **EP 1 011 879 B1**
(45) Date of publication and mention of the grant of the patent: **22.01.2003**
(21) Application number: 98945751.0
(22) Date of filing: 10.09.1998
(51) Int. Cl.: B08B 9/02

(54) **DEVICE FOR PIPELINE INTERIOR CLEANING**
VORRICHTUNG ZUR REINIGUNG DES INNEREN VON ROHRLEITUNGEN
DISPOSITIF DE NETTOYAGE DE L'INTERIEUR DE CONDUITES

(30) Priority: 13.09.1997 SK 125097
(43) Date of publication of application: 28.06.2000
(73) Proprietor: Slovensky Plynarensky Priemysel, S.P., 825 11 Bratislava (SK)
(72) Inventor: SKARUPA, Peter, 905 01 Senica (SK); ZELENAJ, Anton, 949 01 Nitra (SK); SIMKO, Pavol, 905 01 Senica (SK); JARAS, Peter, 906 33 Cerová 121 (SK); KUDLAC, Pavol, 906 03 Kovalov 190 (SK)
(74) Representative: Hano, Christian, Dipl.-Ing.
(86) International application number: PCT/SK98/00012
(87) International publication number: WO 99/013995

(56) References cited:
- EP-A- 0 076 434
- US-A- 4 027 349

## Description

### Technical Field

The invention relates to a device for cleaning of the internal space of a pipeline which can be adjusted to tight seating in the pipeline and is rotatable and slidable, comprising a carrying body and a shield, at least two carrying and guiding parts on the outside circumference of the carrying body and providing stabilisation of the device in motion with regard to the center of gravity thereof; a front brush, and a mechanism for providing rotation and guiding.

### Background Art

At present there is several technological procedures and devices for the realisation of these procedures for the removal of impurities which can be found inside and on the internal surface of pipelines used for transportation of gaseous media. The impurities can have mechanical character, for example residuals from the construction process of the pipeline system as welding electrodes, various metal subjects, etc.

In addition, there are some impurities which are the consequences of abrasive processes at the contact of transported medium with the pipeline surface, condensates, technological impurities from compressor stations.

Devices used for the pipeline cleaning are principally made as sliding mechanisms in the pipeline with the utilisation of physical properties of media effecting the corresponding mechanisms. They contain carrying body where the cleaning elements are fixed. The structure and material of the elements corresponds to the cleaning method.

Among the most frequently used cleaning devices it is possible to include devices of the collar type where collars are the crucial cleaning elements, and their circumference surface is in the tight contact with the internal surface of the pipeline. They are suitable for cleaning of pipelines from fluid impurities.

Magnetic cleaning devices are more universal in the case when cleaning elements consist of two assemblies, of collars and magnetic segments, surface of which is in the distance from the internal surface in the range between approximately 100 up to 200 mm, and it partially restricts the cleaning efficiency. The structure of these devices determines the ability to remove from the pipeline, in addition to fluid impurities, also metal components of impurities. As the consequence of the fact that the device is adjusted to the rotation during the cleaning, and that is not equipped by the element for the breakage of the binding between impurities and the pipeline surface, especially in the case of higher adherence of impurities to the internal wall of the pipeline, lower cleaning efficiency can occur.

Cleaning devices equipped by the collars and brushes with metal bristles are comparatively widespread. The utilisation of brushes in the cleaning process on one side has favourable influence on the cleaning quality of the internal surface of the pipeline and, in fact, the equipment is able to clean the pipeline from all impurities but, simultaneously, increases the load on the collar part of the equipment and it has negative influence on its wear.

The cleaning devices where the cleaning knot is created by collars and collars where the contact area with the pipeline wall is equipped by metal tips are utilised mainly at the removal of thin impurities as, for example, wax from the crude oil pipelines. In this case it is special cleaning device and this is accompanied by higher financial costs for its manufacturing. Equally as in the case of the previous device, at higher clogging of the pipeline the collars are excessively loaded and therefore also worn.

Recently, cleaning devices are produced which, in addition to mentioned cleaning elements, are equipped by the regulator of sliding motion. The aim of this design is to optimise the speed of the devise, for example, in the dependence on the clogging extent or on the extent of the transportation of the transporting medium and to achieve higher cleaning quality by that.

From the well-known tools is it worth to mention a contrivance protected by US patent 4,027,349. Its principle consists of body means adapted to be received in pipe, relative means supported by said body means adapted for rotation coaxially of said pipe, a plurality of brushes circularly spaced around the outer periphery of said relative means and mounted for rotation about an axis directed toward the wall of the pipe, gas motor means for rotating each said brush about its said axis, said relative means having flow passage means for delivering gas from a non-relative source carried by said body means to said gas motor means to operate said gas motor means, said axis of each said brush being disposed at a small forward angle from a direction radially of said rotative means with respect to the direction of rotation of said rotative means whereby the leading edge of each said brush bears against the pipe wall less pressure than the trailing edge of the brush and thereby reducing brush wear, and including means for biasing each brush toward the pipe wall.

Cleaning devices consist of one, two, and sometimes three parts, it means, they have character of hinged device. The two and three-part cleaning devices are suitable, above all, for smaller diameters of pipelines. Simple cleaning devices are used for bigger dimensions of pipelines.

From among such tools we can draw attention to a cleaning device known from EP 0 076 434 A1 characterized by having at least one working head being fixable in a working position and being movable along defined feed paths trough the interior of the pipelines or vessels which are invisible from the outside, and instruments mounted on the at least one working head, the instruments including rot table brushes being mounted on said working head and being pressable against inner wall surfaces to be cleaned, at least one suction nozzle being mounted on the working head and being movable into alignment with a given brush engagement region of a pipeline or vessel, an injector having a suction side connected to the nozzle, a discharge side and a propulsion nozzle, a propellant line feeding the propulsion nozzle of the injector from outside the pipeline or vessel, and a dust collecting bag connected downstream of the discharge side of the injector.

The problem underlying the invention is to provide a device which is able to excellently clean the internal space of a pipeline in a short time.

This problem is solved by a device comprising the features of claim 1. Preferred embodiments of the invention are the subject matters of claims 2 to 14.

According to the invention the cleaning mechanism will provide the removal of, practically, all kinds of impurities appearing in pipelines, either of metal origin as for example impurities arising from the abrasive wearing, impurities which remained in the pipeline systems in the stage of their construction, especially welding electrodes and their residual parts, iron scales, or other impurities as. for example, condensates. The structure and mutual arrangement of individual parts of the device come out from the motion function and, simultaneously, from the cleaning function of the device.

The individual ways of cleaning implemented in the device are logically bound each to other and create the prerequisite that already by one run of the cleaning device through the pipeline according to the invention the high standard of the cleaning will be achieved, and eventual repeated applications of the cleaning with the utilisation of the device which is subject of the protection have character of the check cleaning or the final cleaning according to the clogging rate of the pipeline.

Regulation of the device's speed, in the combination with the revolution of the device around its longitudinal axis, creates prerequisites for proper cleaning of the inter space of the pipeline at the achievement of practically balanced distribution of ferromagnetic impurities caught on the device.

It results from the above mentioned that by the utilisation of the device which is the subject of the protection it is possible to achieve at least comparable quality of the pipeline cleaning with the quality which achieved by the use of existing devices at simultaneous shortening of the cleaning process.

### Brief Description of Drawings

According to the invention the device for the internal walls cleaning is schematically outlined on the picture as the front view with the partial cross-section.

### Best mode for Carrying Out the Invention

Concrete implementation of the device for cleaning of the inner side of the pipeline which is the subject of the protection comes out from the function of the integrated removal of metal, liquid, and other impurities from the pipeline, equally around the whole circumference, including the breakage of the binding between impurities and the internal pipeline surface.

Basically, the device is made of carrying body 1 made of metal material. Around its longitudinal axis there is the transfer poll 1.1 leading to the speed regulator 2 of the sliding motion. The regulator is placed of the shield 1.2 of the device fixed to the carrying body 1. The basic part of the speed regulator 2 of the sliding motion is created by stream oriented, over-pressure dimensioned exchangeable transfer nozzles 2.1.

The outside surface of the carrying body 1 is variable. The variability is determined by the structure and the function of parts which are fixed on the external surface. The individual functional parts are arranged and fixed to the body on the outside circumference of the carrying body 1 with the utilisation of dismantling joints. Starting from the shield 1.2, in opposite direction of the device's motion. there are arranged in the order the carrying and guiding part 3, two sealing and scrapping parts 4, guiding and fixing collar 5. The brush part 6, the main magnet 7, the mechanisms 8 of the revolution and the guide, the guiding and the fixing collar 5, two sealing and scrapping parts 4, the carrying and the guiding part 3, the magnet 9.

The sealing and the scrapping parts 4 and the carrying and the guiding part 3, placed on the side of the device's shield 1.2 are individually inserted between flanges 1.3, and are fixed to them by means of screws 10, while gaps between flanges are limited by distance elements 11. The flanges are fixed to the carrying body 1. From the weight viewpoint the advantage is when the sealing and scrapping parts 4 as well as carrying and guiding parts 3 are made of composite reinforced polymer or other by properties similar plastic material. Carrying and guiding part 3 and sealing and scrapping parts 4 have outside circumference in the shape of the circle. From the viewpoint of the dimension the outside diameter of sealing and scrapping parts 4 enables their seating in the pipeline with the interference and by that the tightness of the seating is provided. The outside diameter of the carrying and guiding part 3 enables movable seating in the pipeline. From the structural viewpoint the advantage is to fix the carrying and guiding parts 3 as well as the sealing and scrapping parts 4 to flanges 1.3 by common screws 10.

The brush part 6 is fixed on the carrying body 1. It is characteristic by adequate flexible metal bristles fixed on the circumference of the holder. From the viewpoint of the efficiency of this function it is suitable if its diameter is adjusted for the seating into the pipeline with the interference. The design of his part is advantageous when sections of the bristles are used with various properties. It is sufficient for common operational conditions of the device if the brush part 6 contains two sections of brushes. The section placed closer to the shield 1.2 of the device contains, in relation to the bristles of the second section, bristles which are thicker, stiffer and have thinner structure of their distribution. The second section contains thinner bristles, more flexible, and with thicker structure of their distribution.

The following part in the order which is fixed on the carrying body 1 is the main magnet 7. The magnet, by its outside circumference, follows the internal circumference of the pipeline while between these two circumferences the gap is created and the outside circumference of the main magnet 7 is in the shape of the n-angle. From the viewpoint of properties it is necessary that the magnet and its placement, especially its distance from the brush part 6, secures his dominating attractive forces in the space of the main magnet 7 which provide entraining even those smallest ferromagnetic impurities from the inside wall of the pipeline.

Behind the main magnet 7 on the carrying body 1 there is fixed the mechanisms of the revolution and the guiding. It consists of spring-cushioned arms equipped by small wheels and arms, by their precisely dimensioned pressing forces interacting with the pipeline, provide revolution of the device. Behind the mechanisms 8 of the revolution and the guiding there are arranged fixing and guiding collar 5 as well as carrying and guiding part 3, or fixing and guiding collar 5 and the set of parts which consists of various combinations of these parts: carrying and guiding part 3, sealing and scrapping part 4, the brush part, and the magnet 9. It is advantageous to assembly the set with the following parts arranged in the order and placed in the direction from the shield 1.2 behind the mechanism 8 of the revolution and the guiding: the carrying and the guiding part 3 - two sealing and scrapping parts 4, carrying and guiding part 3 - the brush part, in the order the magnet 9 - the carrying and the guiding part 3, in picture the unmarked brush part - the carrying and the guiding part 3 - the sealing and the scrapping part 4, in the order the magnet 9 - two sealing and scrapping parts 4 - the carrying and the guiding part 3, or the magnet 7.9 - the carrying and the guiding part 3 - two sealing and scrapping parts 4, magnet 9 - the non-pictured brush part - at least one sealing and scrapping part 4 - the carrying and the guiding part 3, or the magnet 9 non-pictured brush part - the carrying and the guiding part 3, and two sealing and scrapping parts 4. From the viewpoint of the structure and the function it is advantageous if the carrying and the guiding part 3, and the sealing and the scrapping parts 4 from the set of parts are inserted between flanges 1.3 with gaps limited by distance elements 11 squeezed by means of common screws 10. From the viewpoint of the adjustment of parts for the seating into the pipelines, the carrying and the guiding parts 3, the sealing and the scrapping parts 4, the non-pictured brush parts have circular circumference, while the carrying and the guiding parts 3 are adjusted to the movable seating into the pipeline, and the sealing and the scrapping parts 4 are adjusted for the seating into the pipeline with the interference, and by that the tightness of the seating is provided.

The diameter of the non-pictured brush part corresponds to the inside diameter of the pipeline with the interference. From the material viewpoint it is advantageous if each carrying part 3, and the sealing and the scrapping parts 4 from the set of parts are made of polyurethane or other material with similar properties, the non-pictured brush part can be constructed similarly as the brush part 6. From the function viewpoint of this part, at its combination with the magnet 9, the physical phenomena are respected which are similar to the case when the main magnet 7 and the brush part 6 are combined.

From the viewpoint of the device motion it is designed in the way that it is balanced with the centre of gravity and creates conditions for the stabilised motion of the device.

The design of the carrying and the guiding parts 3 as well as the brush parts created of segments is very advantageous. The device consists also of other elements. These elements are used at the manipulation and the transportation of the device, at the repair works and the maintenance. at fixing of the position in the pipeline, at prevention of the device damage. For this purpose the device contains lifting eyes 12 fixed to the carrying body 1, then the bumper 13 placed on the shield 1.2 and hanged to it, Further, it contains auxiliary parts 14 which ca be utilised at the insertion of the device into the pipeline and at its extraction from it. In addition, the device is equipped by signalling equipment which is not shown on the picture and is used for the signalling of the device's position in the pipeline, and by the instrument for the measurement of revolutions of the device. These tool are placed in the protected space. Above mentioned fixing guiding collars 5 are used for the manipulation with the device at the back side of the device and for its maintenance. and by means of them and some auxiliary equipment, for example supporting stands, it is possible to fix the device at its transportation, or at the assistance of the stand's rollers to turn the device at the maintenance and repair works.

The function of the device which is the subject of the protection lays in it that the device is inserted into the transportation pipeline during the operation and its motion is provided with the utilisation of physical properties of transported medium, for example, the gas pressure. The longitudinal hole of the carrying body 2 is filled by medium where it develops pressure on its front part in the direction of flow. Equally, in the direction of the flow it pushes on noses of parts fixed on the outside surface of the carrying body 1, as for example, sealing and scrapping parts 4. In the case of sealing and scrapping parts 4, or the carrying and guiding parts arranged in the area of the device's shield 1.3, the medium inlet to noses of these parts is provided by means of the longitudinal holes 1.1 of the carrying body 1 with the utilisation of axial holes, while such brought medium acts in the direction of the device's motion.

The interconnection of the continuous longitudinal hole 1.1 with the speed regulator 2 of the motion enables to set the speed of the device's motion with the utilisation of the mutual dependence of the hole size on nozzles 2.1 and the pressure difference between sources of the pressure of the transported medium, for example, in the case of gas between compressor stations. The orientation of the nozzles discharge 2.1 and their size is provided by the flow of the gas through nozzles 2.1 which disturbs the adhesion of impurities to the walls of the pipeline and such released impurities are pushed in front of the device with the utilisation of functional properties of the carrying and the guiding part 3, and the sealing and the scrapping parts 4. In technological spaces of the pipeline the transfer of these impurities occurs into the technological places, while, consequently, the impurities of the metal character are collected from these spaces by means of the brush part 6 and the main magnet 7.

The function of the brush part 6 and brush parts generally is to clean mechanically the internal surface of the pipeline and, simultaneously, bring impurities into motion and into the position which enable, by the resulting effects of magnetic forces in direction to the main magnet 7, to catch efficiently the metal impurities and to transfer them into the final place of the cleaning.

The design of the brush part 6 contributes significantly to the efficiency of this function of the device which is characteristic by two sections. The section with thicker, less flexible and less elastic bristles in thinner structure of the distribution. arranged from the side of the device's shield 1.2 performs rough cleaning. The second section contains more flexible bristles. which are thinner and have higher density of the distribution, and provides final cleaning of the internal surface of the device and, simultaneously, releases the adhesion of impurities to the internal surface of the pipeline, creates conditions for efficiency of the attractive forces of the main magnet 7, and by that also efficiently entrains metal impurities and causes their adhesion to this magnet. From this viewpoint it is advantageous to place the brush part 6 into the magnetic field of the main magnet 7.

The function of the main magnet 7 is to attract metal impurities and to keep them in this position up to the termination of the cycle in the cleaning process. From this viewpoint the structure of elements providing magnetic cleaning respects magnetic phenomena around the magnet, as for example magnetic induction, and properly eliminates negative influence of these phenomena on the cleaning process. Sufficiently big gap between outside circumference of the main magnet 7 and the internal surface of the pipeline creates space where the big volume of impurities can be caught. The mechanism 8 of the revolution and the guide of the device provides the revolution of the device, and as the consequence of that the device makes helical motion. The advantage of this way of the motion is that, on one side, provides balanced cleaning of the surface, for example by the brush part 6, and on the other side, provides balanced abrasion of parts. Other contribution of the device's revolution is more balanced distribution of impurities caught on the surface of the main magnet 7 or the magnet 9.

The function of the carrying and guiding parts 3 is to equally transfer the load caused by the device's weight to the pipeline and, simultaneously, to provide fluent guiding of the device during the motion in the pipeline. The mechanism 8 of the revolution and the guiding fulfils, in addition to the device's revolution, also the function of the guiding facility in the pipeline.

The function of the set of parts, arranged with regard to the direction of the motion at the end of the device, is the further increase of the cleaning efficiency. The individual parts of this set practically fulfil the same functions as the parts arranged in the front pant of this device.

### Industrial Applicability

The devices for cleaning of the internal surface of the pipeline is especially suitable for cleaning of gas pipelines with bigger diameters of the pipeline. However, after smaller adjustments, it is possible to expect also the utilisation for crude oil pipelines, or for cleaning of pipelines which are used for the transportation of other kinds of media.

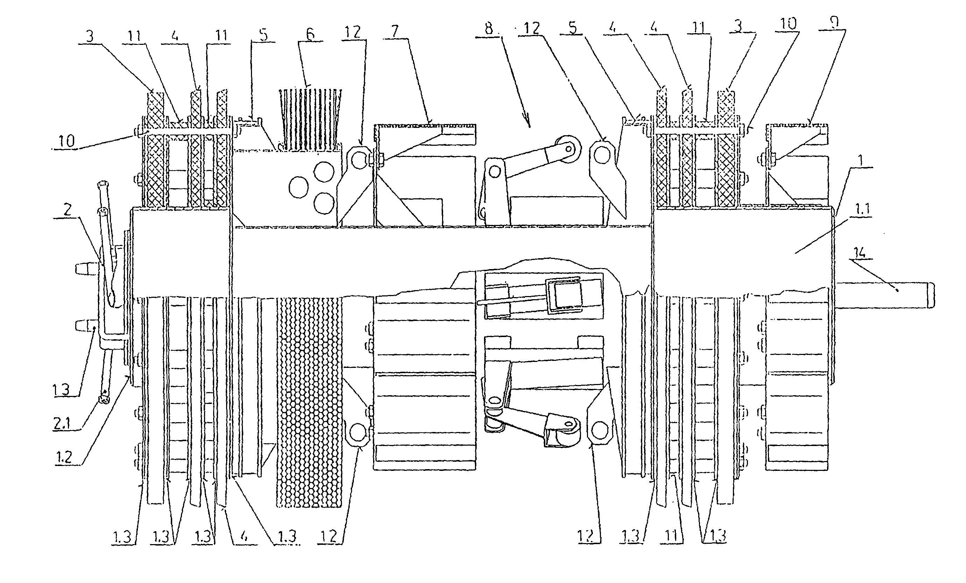

## Claims

1. A device for cleaning of the internal space of a pipeline which can be adjusted to tight seating in the pipeline and is rotatable and slidable, comprising
- a carrying body (1) and a shield (1.2);
- at least two carrying and guiding parts (3) on the outside cicumference of the carrying body (1) and providing stabilisation of the device in motion with regard to the center of gravity thereof;
- a front brush (6);
- a mechanism (8) for providing rotation and guiding;
**characterized in that**
- rotation and sliding of the device is effected by utilizing the operational properties of the transported medium;
- the carrying body (1) is equipped with a by-pass hole (1.1) oriented in the direction of the sliding motion of the device;
- a speed regulator (2) for the sliding motion is provided;
- front sealing and scraping parts (4) made of a flexible material are provided;
- the front sealing and scraping parts (4) and the front brush (6) have a circular cross-sectional profile;
- the outside circumference of a main magnet (7) being adjusted to follow the inside circumference of the pipeline with a gap therebetween;
- the shield (1.2), one guiding and carrying part (3), at least one sealing and one scrapping part (4), the front brush (6), the main magnet (7), the mechanism (8) and a further guiding and carrying part (3) or a set of parts are arranged one after the other in the direction opposite to the direction of sliding motion of the device..

2. Device according to claim 1, **characterized in that** the set of parts is formed by a further guiding and carrying part (3) and at least one sealing and scrapping part (4), these parts being placed in the direction of the sliding motion of the device behind the mechanism (8).

3. The device according to the claim 1, **characterized in that** the set of parts is formed by a further guiding and carrying part (3) and a further brush part, these parts being placed in the direction of the sliding motion of the device behind the mechanism (8).

4. The device according to the claim 1, **characterized in that** the set of parts is formed by a further magnet (9) and a further guiding and carrying part (3), these parts being placed in the direction of the sliding motion of the device behind the mechanism (8) in the order further magnet (9) and further guiding and carrying part (3).

5. The device according to the claim 1, **characterized in that** the set of parts is formed by a further brush part, a further guiding and carrying part (3), the at least one further sealing and scrapping part (4), these parts being placed in the direction of the sliding motion of the device behind the mechanism (8).

6. The device according to the claim 1, **characterized in that** the set of parts is formed by a further magnet (9), a further carrying and guiding part (3), at least one further sealing and scrapping part (4), these parts being placed in the direction of the sliding motion of the device behind the mechanism (8) in the order, the further magnet (9), the at least one further sealing and scrapping part (4), the further carrying and guiding part (3) or the further magnet (9), the further carrying and guiding part (3) and the at least one further sealing and scrapping part (4).

7. The device according to the claim 1, **characterized in that** the set of parts is formed by a further carrying and guiding part (3), at least one further sealing and scrapping part (4), a further brush part and a further magnet (9), these parts being placed in the direction of the sliding motion of the device behind the mechanism (8) in the order, the further magnet (9), the further brush part, the at least one further sealing and scrapping part (4), the further carrying and guiding part (3) or the further magnet (9), the further brush part, the further carrying and guiding part (3) and the at least one further sealing and scrapping part (4).

8. The device according to the claims 1 to 7, **characterized in that** the main magnet (7) and the brush part (6) are mutually adjusted to direct attractive forces caused by the magnetic induction towards the main magnet (7).

9. The device according to claim 1, 4, 6, or 7, **characterized in that** the further magnet (9) is adjusted to excite magnetic induction in the space for directing attractive forces to the magnet (9).

10. The device according to one of the claims 1 to 9, **characterized in that** the brush part (6) comprises two sections, the section neighbouring the main magnet (7) comprising more flexible and thinner bristles, which are distributed in thicker structure than the bristles of the second section.

11. The device according to one of the claims 1 to 10, **characterized in that** each carrying and guiding part (3) and each brush part (6) is formed of segments.

12. The device according to one of the claims 1 to 11, **characterized in that** each carrying and guiding part (3) and each sealing and scraping part (4) is fixed on flanges made of plastic material advantageously from composite enforced polymer.

13. The device according to one of the claims 1 to 12, **characterized by** a revolution counter and a unit signalling the position of the device which are placed in a protected space.

14. The device according to one of the claims 1 to 13, **characterized in that** the shield (1.2) is equipped with a buffer (13)

## Patentansprüche

1. Vorrichtung zur Reinigung des Innenraums einer Rohrleitung, die für ein dichtes Anliegen in der Rohrleitung einstellbar und drehbar und verschiebbar ist, mit
- einem Trägerkörper (1) und einem Schild (1.2),
- wenigstens zwei Träger- und Führungsteilen (3) an dem Außenumfang des Trägerkörpers (1), die eine Stabilisation der sich bewegenden Vorrichtung bezüglich ihres Schwerpunktes schaffen,
- einer vorderen Bürste (6),
- einem Mechanismus (8), der eine Drehung und eine Führung schafft,
**dadurch gekennzeichnet, dass**
- die Drehung und die Verschiebung der Vorrichtung durch Verwendung der Betriebseigenschaften des transportierten Mediums bewirkt wird,
- der Trägerkörper (1) mit einer Bypass-Öffnung (1.1) ausgestattet ist, die in Richtung der Verschiebungsbewegung der Vorrichtung ausgerichtet ist,
- eine Drehzahtregeteinrichtung (2) für die Verschiebungsbewegung vorgesehen ist,
- vordere Dicht- und Schabteile (4) vorgesehen sind, die aus flexiblem Material hergestellt sind,
- die Schabteile (4) und die vordere Bürste (6) ein kreisförmiges Querschnittsprofil haben,
- der Außenumfang eines Hauptmagneten (7) so eingestellt ist, dass er dem Innenumfang der Rohrleitung mit einem Spalt dazwischen folgt,
- das Schild (1.2), der Einführungs- und Trägerteil (3), wenigstens ein Dicht- und ein Schabteil (4), die vordere Bürste (6), der Hauptmagnet (7), der Mechanismus (8) und ein weiterer Führungs- und Trägerteil (3) oder ein Satz von Teilen nacheinander in der Richtung angeordnet sind, die der Richtung der Verschiebungsbewegung der Vorrichtung entgegengesetzt ist.

2. Vorrichtung nach Anspruch 1, **dadurch gekennzeichnet, dass** der Satz von Teilen durch einen weiteren Führungs- und Trägerteil (3) und wenigstens einen Dicht- und Schabteil (4) gebildet wird, wobei diese Teile in Richtung der Verschiebungsbewegung der Vorrichtung hinter dem Mechanismus (8) angeordnet sind.

3. Vorrichtung nach Anspruch 1, **dadurch gekennzeichnet, dass** der Satz von Teilen von einem weiteren Führungs- und Trägerteil (3) und einem weiteren Bürstenteil gebildet wird, wobei diese Teile in Richtung der Verschiebungsbewegung der Vorrichtung hinter dem Mechanismus (8) angeordnet sind.

4. Vorrichtung nach Anspruch 1, **dadurch gekennzeichnet, dass** der Satz von Teilen von einem weiteren Magnet (9) und einem weiteren Führungs- und Trägerteil (3) gebildet wird, wobei diese Teile in Richtung der Verschiebungsbewegung der Vorrichtung hinter dem Mechanismus (8) in der Reihenfolge weiterer Magnet (9) und weiteres Führungs- und Trägerteil (3) angeordnet sind.

5. Vorrichtung nach Anspruch 1, **dadurch gekennzeichnet, dass** der Satz von Teilen von einem weiteren Bürstenteil, einem weiteren Führungs- und Trägerteil (3), und dem wenigstens einen weiteren Dicht- und Schabteil (4) gebildet wird, wobei diese Teile in Richtung der Verschiebungsbewegung der Vorrichtung hinter dem Mechanismus (8) angeordnet sind.

6. Vorrichtung nach Anspruch 1, **dadurch gekennzeichnet, dass** der Satz von Teilen von einem weiteren Magnet (9), einem weiteren Träger- und Führungsteil (3), wenigstens einem weiteren Dicht- und Schabteil (4) gebildet wird, wobei diese Teile in Richtung der Verschiebungsbewegung der Vorrichtung hinter dem Mechanismus (8) in der Reihenfolge der weitere Magnet (9), der wenigsten eine weitere Dicht- und Schabteil (4), der weitere Träger- und Führungsteil (3), oder der weitere Magnet (9), der weitere Träger- und Führungsteil (3) und der wenigsten eine weitere Dicht- und Schabteil (4) angeordnet sind.

7. Vorrichtung nach Anspruch 1, **dadurch gekennzeichnet, dass** der Satz von Teilen von einem weiteren Träger- und Führungsteil (3), wenigstens einem weiteren Dicht- und Schabteil (4), einem weiteren Bürstenteil und einem weiteren Magnet (9) gebildet wird, wobei diese Teile in Richtung der Verschiebungsbewegungen der Vorrichtung hinter dem Mechanismus (8) in der Reihenfolge der weitere Magnet (9), der weitere Bürstenteil, der wenigsten eine weitere Dicht- und Schabteil (4), der weitere Trägerund Führungsteil (3), oder der weitere Magnet (9), der weitere Bürstenteil, der weitere Träger- und Führungsteil (3) und der wenigstens eine weitere Dicht- und Schabteil (4) angeordnet sind.

8. Vorrichtung nach den Ansprüchen 1 bis 7, **dadurch gekennzeichnet, dass** der Hauptmagnet (7) und der Bürstenteil (6) gegenseitig so eingestellt sind, dass Anziehungskräfte, die durch die magnetische Induktion verursacht werden, in Richtung des Hauptmagneten (7) gerichtet werden.

9. Vorrichtung nach Anspruch 1, 4, 6 oder 7, **dadurch gekennzeichnet, dass** der weitere Magnet (9) so eingestellt wird, dass eine magnetische Induktion im Raum erregt wird, damit Anziehungskräfte auf den Magnet (9) gerichtet werden.

10. Vorrichtung nach einem der Ansprüche 1 bis 9, **dadurch gekennzeichnet, dass** der Bürstenteil (6) wenigstens zwei Abschnitte umfasst, wobei der dem Hauptmagnet (7) benachbarte Abschnitt flexiblere und dünnere Borsten umfasst, die in dickerer Struktur verteilt sind als die Borsten des zweiten Abschnitts.

11. Vorrichtung nach einem der Ansprüche 1 bis 10, **dadurch gekennzeichnet, dass** jeder Träger- und Führungsteil (3) und jeder Bürstenteil (6) von Segmenten gebildet wird.

12. Vorrichtung nach einem der Ansprüche 1 bis 11, **dadurch gekennzeichnet, dass** jeder Träger- und Führungsteil (3) und jeder Dicht- und Schabteil (4) an Flanschen befestigt ist, die aus Kunststoffmaterial, vorzugsweise aus verbundverstärktem Polymer hergestellt sind.

13. Vorrichtung nach einem der Ansprüche 1 bis 12, **gekennzeichnet durch** einen Drehzahlmesser und eine die Position der Vorrichtung signalisierenden Einheit, die in einem geschützten Raum angeordnet ist.

14. Vorrichtung nach einem der Ansprüche 1 bis 13, **dadurch gekennzeichnet, dass** das Schild (1.2) mit einem Dämpfer (13) ausgestattet ist.

## Revendications

1. Dispositif de nettoyage de l'intérieur d'une conduite pouvant être ajusté pour contact étroit dans la conduite et pouvant tourner et glisser, comprenant
- un corps porteur (1) et un bouclier (1.2) ;
- au moins deux pièces porteuses et de guidage (3) sur la circonférence extérieure du corps porteur (1) et réalisant la stabilisation du dispositif en mouvement par rapport à son centre de gravité ;
- une brosse avant (6) ;
- un mécanisme (8) pour réaliser la rotation et le guidage ;
**caractérisé en ce que**
- la rotation et le glissement du dispositif sont exécutés en utilisant les propriétés opérationnelles du milieu transporté ;
- le corps porteur (1) est muni d'un trou de dérivation (1.1) orienté dans le sens du déplacement glissant du dispositif ;
- un régulateur de vitesse (2) pour le déplacement glissant est prévu ;
- des pièces d'étanchéité et de raclage avant (4) fabriquées en un matériau flexible sont prévues ;
- les pièces d'étanchéité et de raclage avant (4) et la brosse avant (6) ont un profil à section transversale circulaire ;
- la circonférence extérieure d'un aimant principal (7) étant ajustée pour suivre la circonférence intérieure de la conduite avec un espace entre elles;
- le bouclier (1.2), une pièce porteuse et de guidage (3), au moins une pièce d'étanchéité et de raclage avant (4), la brosse avant (6), l'aimant principal (7), le mécanisme (8) et une autre pièce porteuse et de guidage (3) ou un jeu de pièces sont disposés les uns après les autres dans la direction opposée au sens de déplacement glissant du dispositif.

2. Dispositif selon la revendication 1, **caractérisé en ce que** le jeu de pièces est formé par une autre pièce porteuse et de guidage (3), et au moins une pièce d'étanchéité et de raclage avant (4), ces pièces étant placées dans le sens du déplacement glissant du dispositif derrière le mécanisme (8).

3. Dispositif selon la revendication 1, **caractérisé en ce que** le jeu de pièces est formé par une autre pièce porteuse et de guidage (3), et une autre pièce de brossage, ces pièces étant placées dans le sens du déplacement glissant du dispositif derrière le mécanisme (8).

4. Dispositif selon la revendication 1, **caractérisé en ce que** le jeu de pièces est formé par un autre aimant (9) et une autre pièce porteuse et de guidage (3), ces pièces étant placées dans le sens du déplacement glissant du dispositif derrière le mécanisme (8) dans l'ordre suivant: l'autre aimant (9) et l'autre pièce porteuse et de guidage (3).

5. Dispositif selon la revendication 1, **caractérisé en ce que** le jeu de pièces est formé par une autre pièce de brossage, une autre pièce porteuse et de guidage (3), la au moins une pièce d'étanchéité et de raclage avant (4), ces pièces étant placées dans le sens du déplacement glissant du dispositif derrière le mécanisme (8).

6. Dispositif selon la revendication 1, **caractérisé en ce que** le jeu de pièces est formé par un autre aimant (9), une autre pièce porteuse et de guidage (3), au moins une pièce d'étanchéité et de raclage avant (4), ces pièces étant placées dans le sens du déplacement glissant du dispositif derrière le mécanisme (8) dans l'ordre suivant : l'autre aimant (9), la au moins une autre pièce d'étanchéité et de raclage (4), l'autre pièce porteuse et de guidage (3) ou l'autre aimant (9), l'autre pièce porteuse et de guidage (3) et la au moins une autre pièce d'étanchéité et de raclage (4).

7. Dispositif selon la revendication 1, **caractérisé en ce que** le jeu de pièces est formé par une autre pièce porteuse et de guidage (3), au moins une pièce d'étanchéité et de raclage avant (4), une autre pièce de brossage et un autre aimant (9), ces pièces étant placées dans le sens du déplacement glissant du dispositif derrière le mécanisme (8) dans l'ordre suivant : l'autre aimant (9), l'autre pièce de brossage, la au moins une autre pièce d'étanchéité et de raclage (4), l'autre pièce porteuse et de guidage (3) ou l'autre aimant (9), l'autre pièce de brossage, l'autre pièce porteuse et de guidage (3) et la au moins une autre pièce d'étanchéité et de raclage (4).

8. Dispositif selon les revendications 1 à 7, **caractérisé en ce que** l'aimant principal (7) et la pièce de brossage (6) sont mutuellement ajustés pour diriger les forces d'attraction causées par l'induction magnétique vers l'aimant principal (7).

9. Dispositif selon la revendication 1, 4, 6 ou 7, **caractérisé en ce que** l'autre aimant (9) est ajusté pour exciter une induction magnétique dans l'espace afin de diriger des forces d'attraction vers l'aimant (9).

10. Dispositif selon l'une des revendications 1 à 9, **caractérisé en ce que** la pièce de brossage (6) comprend deux parties, la partie voisine de l'aimant principal (7) comprenant des fils plus flexibles et plus fins qui sont répartis en une structure plus épaisse que les fils de la deuxième partie.

11. Dispositif selon l'une des revendications 1 à 10, **caractérisé en ce que** chaque pièce porteuse et de guidage (3) et chaque pièce de brossage (6) sont formées de segments.

12. Dispositif selon l'une des revendications 1 à 11, **caractérisé en ce que** chaque pièce porteuse et de guidage (3) et chaque pièce d'étanchéité et de raclage avant (4) sont fixées sur des brides fabriquées en matière plastique, de préférence à partir de polymère composite renforcé.

13. Dispositif selon l'une des revendications 1 à 12, **caractérisé par** un compte-tours et une unité signalant la position du dispositif qui sont placés dans un espace protégé.

14. Dispositif selon l'une des revendications 1 à 13, **caractérisé en ce que** le bouclier (1.2) est équipé d'un amortisseur (13).
